## Europäisches Patentamt

## European Patent Office

## Office européen des brevets

(19)

(11) Numéro de publication: **0 024 265**
**B2**

(12) **NOUVEAU FASCICULE DE BREVET EUROPÉEN**

(45) Date de publication du nouveau fascicule du brevet:
**23.09.87**

(51) Int. Cl.⁴: **B 60 P 3/08**

(21) Numéro de dépôt: **80830055.2**

(22) Date de dépôt: **21.07.80**

(54) **Véhicule à deux plates-formes superposées pour le transport de véhicules automobiles, avec plate-forme supérieure inclinable et abaissable.**

(30) Priorité: **08.08.79 IT 6863679**

(43) Date de publication de la demande:
**25.02.81 Bulletin 81/8**

(45) Mention de la délivrance du brevet:
**18.01.84 Bulletin 84/3**

(45) Mention de la decision concernant l'opposition:
**23.09.87 Bulletin 87/39**

(84) Etats contractants désignés:
**AT BE CH DE FR GB LI LU NL SE**

(56) Documents cité:
**FR-A-1 337 454**
**FR-A-1 495 287**
**FR-A-2 213 856**
**FR-A-2 317 125**
**FR-A-2 377 904**
**FR-A-2 399 336**
**LU-A-55 145**
**US-A-2 883 231**
**US-A-3 690 717**

**Le dossier contient des informations techniques présentées postérieurement au dépôt de la demande et ne figurant pas dans le présent fascicule.**

(73) Titulaire: **ROLFO S.p.A., 30, Corso IV Novembre, I-12042 Bra (Cuneo) (IT)**

(72) Inventeur: **Rolfo, Giorgio, 53, Corso IV Novembre, I-12042 BRA (Cuneo) (IT)**

(74) Mandataire: **Saconney, Piero, c/o JACOBACCI-CASETTA & PERANI S.n.c. Via Alfieri, 17, I-10121 Torino (IT)**

EP 0 024 265 B2

LIBER, STOCKHOLM 1987

## Description

L'invention concerne un véhicule à deux plates-formes superposées pour le transport de véhicules automobiles, du genre dans lequel la plate-forme supérieure est supportée, au voisinage de ses deux extrémités, par des moyens de levage respectivement avant et arrière, susceptibles d'être actionnés indépendamment pour mettre la plate-forme supérieure notamment dans des positions intermédiaires inclinées avec une pente descendante vers l'arrière, et dans lequel au moins les moyens de levage arrière comprennent une paire de montants lateraux articules, autour d'axes transversaux horizontaux, par leurs parties supérieures à la plate-forme supérieure et par leurs parties inférieures à des coulisseaux respectifs, susceptibles de coulisser dans des glissières longitudinales portées par le châssis du véhicule, chaque montant étant à son tour articulé, en un point intermédiaire de sa longueur et autour d'un axe transversal horizontal, à une extrémité d'un étançon respectif, celui-ci étant monté sur le châssis de façon à pouvoir pivoter autour d'un axe transversal horizontal, et les étançons étant munis, pour la commande de leur pivotement, de moyens à vérin et maneton dans lesquels un vérin hydraulique est articulé par l'une de ses extrémités au châssis et par son autre extrémité à un maneton solidaire en rotation de l'étançon.

Ces caractéristiques, qui correspondent au préambule de la revendication 1, sont connues du FR-A-2 317 125. Selon ce document les moyens à vérin et maneton comprennent, pour chaque étançon, un vérin articulé entre le châssis du véhicule et un levier coudé qui fait partie de l'étançon et joue le rôle d'un maneton.

Les véhicules de ce genre (motrices et remorques) sont utilisés pour le transport de voitures automobiles, de véhicules utilitaires moyens et de poids-lourds. Soit la motrice, soit la remorque sont pourvues d'une plate-forme supérieure qui en position haute est utilisée pour le transport de véhicules automobiles sur deux étages et qui, en des positions inclinées, est utilisée soit comme rampe de chargement, soit pour transporter un seul véhicule de grande longueur. Lorsque la plate-forme supérieure se trouve par contre dans la position abaissée sur la plate-forme inférieure, le véhicule est utilisable pour le transport d'une cargaison de marchandises.

Dans le système selon le FR-A-2 317 125 la liaison mécanique entre les deux ensembles étançon-montant est réalisée seulement à travers le châssis du véhicule et à travers la plate-forme supérieure, par l'entremise des articulations de deux montants. Ce système est susceptible de présenter des jeux remarquables à cause desquels les montants, dans leurs mouvements, peuvent prendre des inclinaisons relatives décalées, ayant pour conséquences soit des graves coincements, soit des oscillations transversales de la plate-forme supérieure sous l'effet des forces latérales, principalement dynamiques, qui se manifestent pendant la marche du véhicule. Pour réduire ces jeux autant que possible, on adopte pour les articulations des axes très longs, ce qui entraîne l'adoption de montants et d'étançons de forte épaisseur. Etant donné qu'il n'est pas possible d'augmenter l'encombrement latéral des véhicules au-delà des limites imposées par les réglements, la forte épaisseur des deux ensembles montant-étançon réduit l'espace utilisable entre ces ensembles et donc la largeur des véhicules automobiles que l'on peut charger sur la plate-forme inférieure. La réduction de l'espace utilisable constitue notamment un obstacle s'opposant au chargement de camions pourvus de la traverse arrière anti-encastrement prévue par les règlements.

Le but principal de l'invention est celui de réaliser un véhicule du genre mentionné dans le préambule, dans lequel le système de déplacement comporte en lui-même des caractéristiques telles que les jeux éventuels dans les articulations ne soient pas susceptibles de produire lesdits coincements, en permettant ainsi d'adopter des axes plus courts dans les articulations et donc des montants et des étançons de largeurs plus faibles, à tout avantage de l'espace utilisable entre les deux ensembles montant-étançon.

Selon l'invention ce but est atteint par le fait que les deux étançons pivotants sont calés, parallèlement entre eux, sur un arbre transversal commun monté rotativement dans le châssis de sorte que les étançons constituent avec l'arbre une chape rigide dont les branches sont formées par lesdits étançons, et en ce que lesdits moyens à vérin et maneton comprennent au moins un mameton calé sur l'arbre transversal commun.

Dans un système selon l'invention la chape rigide qui comprend les deux étançons assure des déplacements à l'unisson des montants et en plus fait en sorte que ces montants soient constamment parallèles entre eux.

Ces mêmes caractéristiques évitent les coincements et permettent de dimensionner les articulations avec des axes courts et donc de donner une faible épaisseur aux montants et aux étançons.

Le fait que la chape rigide est articulée aux montants dans un point intermédiaire de leur extension contribue en outre d'une façon remarquable à rendre négligeables, malgré l'utilisation des axes courts, les oscillations latérales ou débattements latéraux de la plate-forme supérieure sous l'effet des efforts transversaux soit statiques, soit dynamiques.

Un dispositif de levage de la plate-forme supérieure d'un véhicule de la catégorie visée, qui comporte une chape rigide, est connu du document FR-A-2 399 336. Cette chape rigide est formée par un arbre transversal et par des bras auxquels est articulée la plate-forme supérieure et qui font l'office des montants du dispositif de l'invention. Le pivotement de la chape est obtenu par un vérin appliquant sa force à un maneton calé sur l'arbre. Ce dispositif connu a l'inconvénient que la rigidité de la chape ne peut être obtenue qu'au prix d'une forte épaisseur des bras, ce qui ne permet pas d'augumenter l'espace utilisable entre les bras.

Dans ce qui suit, l'invention est exposée plus en détail à l'aide des dessins.

Les figures 1, 2, 3 et 4 sont des vues schématiques de profil d'une motrice de camion-remorques selon un premier mode d'exécution, dans lequel la plate-forme supérieure est représentée en quatre positions différentes.

La figure 5 est une vue en perspective arrachée des moyens de levage arrière du véhicule des figures 1 à 4.

La figure 6 est une vue en perspective arrachée des moyens de levage avant de ce même véhicule.

La figure 7 est une vue schématique de profil d'une motrice de camion-remorque selon un autre mode d'exécution.

La figure 8 est une vue schématique de profil d'une remorque de camion-remorque selon le mode d'exécution de la figure 7.

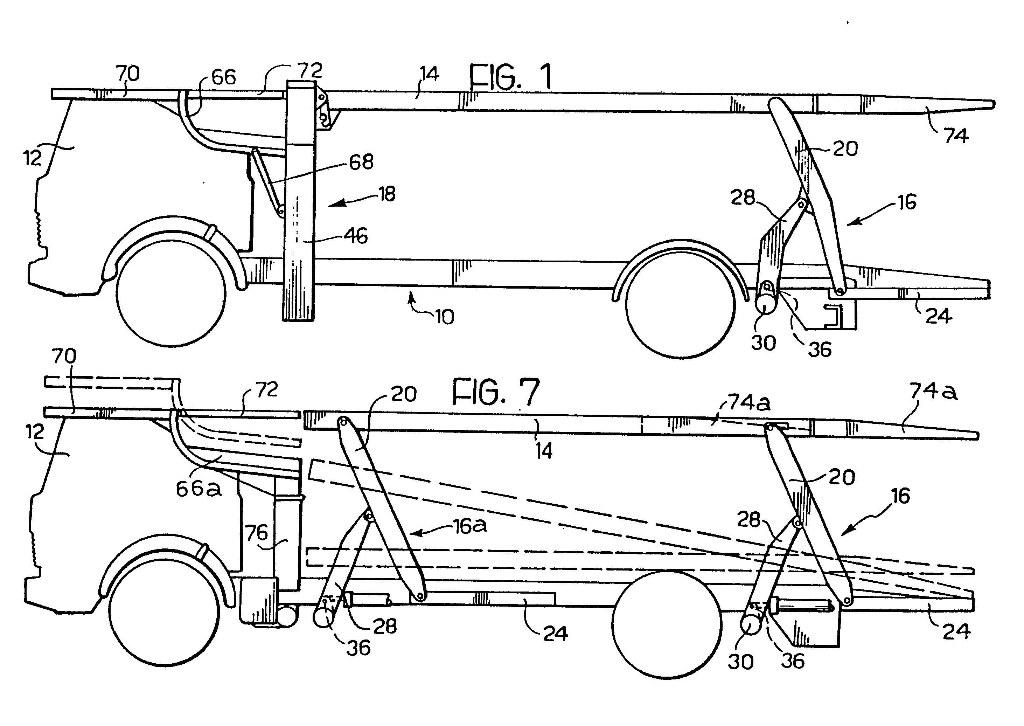

En se référant aux figures 1, 2, 3 et 4, une motrice de camion-remorque pour le transport de véhicules automobiles comprend un châssis, indiqué dans son ensemble par 10. La partie avant du châssis 10 porte une cabine 12.

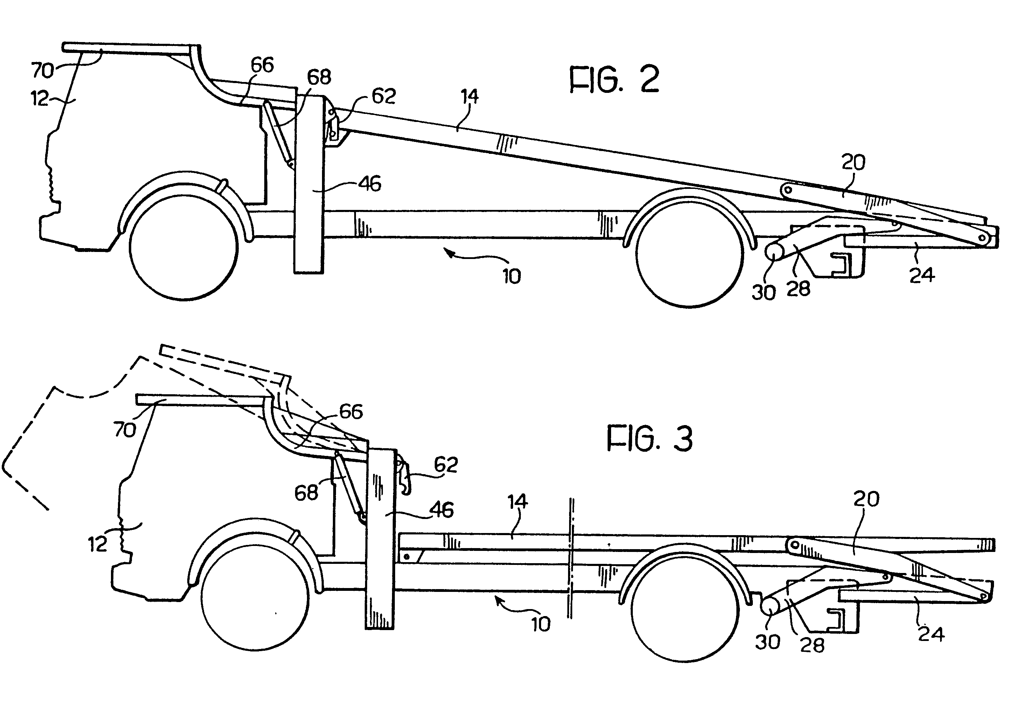

La cabine 12 est basculante pour des raisons d'entretien, ainsi que représenté en tirets en figure 3.

La partie du châssis 10 située derrière la cabine 12 constitue ou porte une plate-forme inférieure. A la plate-forme inférieure est superposée une plate-forme supérieure 14 qui peut être mise dans des positions différentes. En figure 1 la plate-forme 14 est relevée à l'horizontale pour constituer un véhicule de transport à deux étages. En figure 2 la plate-forme 14 est fortement inclinée avec une pente descendante vers l'arrière, pour constituer une rampe de chargement de véhicules automobiles sur cette même plate-forme 14 ou de déchargement des véhicules de cette plate-forme. Dans cette même position inclinée la plate-forme supérieure 14 est en masure de transporter un véhicule industriel de grande longueur et de grande largeur.

En figure 3 la plate-forme supérieure 14 est totalement abaissée à l'horizontale sur la plate-forme inférieure et se prête au transport de marchandises diverses et/ou d'un véhicule de grande largeur.

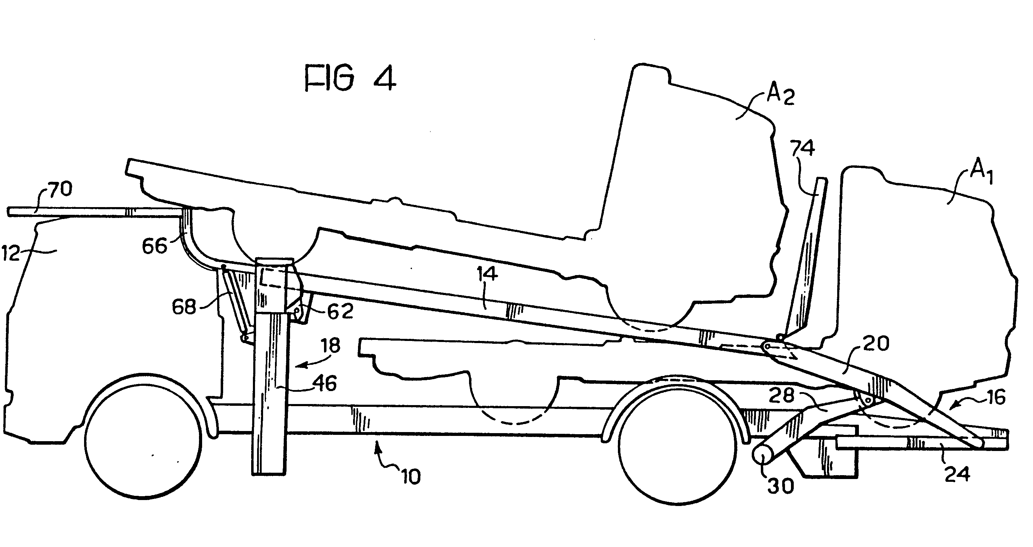

En figure 4 la plate-forme supérieure 14 est abaissée dans une position intermédiaire pour le transport de deux camions de dimensions moyennes, ainsi qu'il sera mieux expliqué plus loin.

Les mouvements de la plate-forme supérieure 14 entre lesdites trois positions sont obtenus par des moyens de levage arrière, indiqués par 16 dans leur ensemble, et par des moyens de levage avant, indiqués dans leur ensemble par 18.

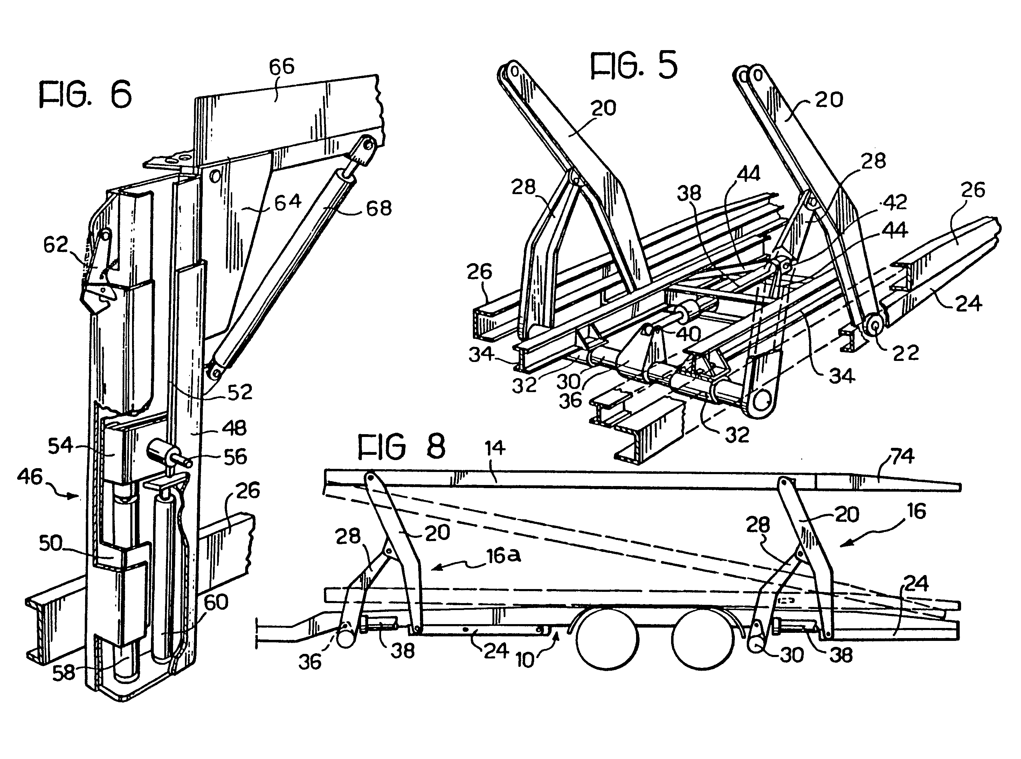

En se référant à la figure 5, ainsi qu'aux figures 1 à 4, les moyens de levage arrière comprennent une paire de montants latéraux 20. Ces montants 20 sont articulés à la plate-forme supérieure 14 autour d'un axe transversal horizontal. Par leurs parties inférieures les montants 20 sont articulés à des coulisseaux à galet 22 respectifs. Chacun de ces derniers est susceptible de se déplacer dans une glissière longitudinale 24 constituée par un profilé en C fixé aux longerons principaux 26 du châssis 10. En un point intermédiaire de la longueur de chaque montant 20 est articulée, autour d'un axe transversal horizontal, une extrémité d'un étançon 28 respectif. Les autres extrémités des deux étançons 28 sont calées par soudure à des extrémités respectives d'un arbre transversal commun 30. L'arbre 30 est monté rotatif dans une paire de paliers 32 fixés à des longerons intérieurs 34 respectifs du châssis. Le calage des étançons pivotants 28 sur l'arbre 30 est tel que ces étançons sont rigoureusement parallèles entre eux. De cette façon les deux étançons 28 constituent les branches d'une chape rigide dont la traverse est constituée par l'arbre 30.

Sur le milieu de l'arbre transversal 30 est calé, entre les deux paliers 32, un maneton 36. Le long du milieu du châssis 10 s'étend, sensiblement à l'horizontale, un vérin hydraulique de commande 38. L'extrémité du vérin 38, c'est-à-dire le culot de son cylindre, est articulée en 42 à une bride 44 qui à son tour est fixée aux longerons intérieurs 34. Le vérin unique 38, ainsi que l'on comprendra, commande, par le maneton 36 et l'arbre 30, le pivotement à l'unisson des deux étançons 28 ou branches de la chape et donc les mouvements d'oscillation des montants 20 qui produisent l'abaissement et le soulèvement de la partie arrière de la plate-forme 14. L'articulation du vérin 38 autour d'un axe horizontal, comme indiqué en 42, permet à ce vérin d'accomplir les petits débattements nécessaires, dus aux courses en arc de cercle de son autre articulation 40.

Dans une autre réalisation, non représentée, à la place d'un seul vérin 38 il pourrait y avoir deux ou plusieurs vérins soit alimentés en parallèle, soit disposés mécaniquement en parallèle et chacun desquels serait associé à un maneton respectif calé sur un arbre transversal commun.

Les moyens de levage avant 18 comprennent une paire de montants latéraux 46, un desquels est représenté dans ses détails en figure 6. Chaque montant latéral 46 comprend une partie fixe 48 en caisson en tôle robuste, qui est fixée à un longeron principal 26 respectif du châssis 10 dans la zone située immédiatement derrière la cabine 12. A l'intérieur de la partie fixe 48 se trouve une partie mobile 50 susceptible de coulisser verticalement d'une façon télescopique, cette partie également étant en tôle robuste et ayant une forme en caisson. Les deux parties mobile 48 et fixe 50 ont en coupe horizontale un profil en C équarri, de façon à déterminer conjointement, sur leur côté tourné vers l'intérieur du châssis 10, une fente verticale 52. A l'intérieur de la partie mobile 50 se trouve un chariot 54, en tôle robuste également, lequel est susceptible de coulisser verticalement. Le chariot 50 porte un axe latéral 56 qui fait saillie vers l'intérieur du châssis 10 à travers la fente 52.

L'extrémité avant de la plate-forme supérieure 14 est supportée d'une façon articulée, par l'entremise de biellettes (non représentées), par les axes 66 des chariots 54 des deux montants 46.

A l'intérieur de chaque montant 46 se trouve une paire de vérins hydrauliques verticaux, indiqués par 58 et 60. Le vérin 58 commande les mouvements verticaux du chariot 54. Le vérin 60 commande les mouvements verticaux de la partie 30 mobile intérieure 50 du montant 46.

Un tronçon supérieur de la partie mobile 50 fait saillie d'une façon permanente de la partie fixe 48 et porte des moyens d'accrochage qui comprennent essentiellement une plaque à pendule chantournée 62. Cette dernière est représentée et décrite dans le modèle d'utilité italien n° 157.657 au nom de la demanderesse, auquel on renvoie pour sa description détaillée.

Il suffira ici de dire que la plaque à pendule 62 de chaque montant 46 est susceptible de s'accrocher à la partie avant de la plate-forme 14 pour empêcher sa descente involontaire et pour en produire les mouvements verticaux le long d'un tronçon de course supérieure, ainsi que l'on verra mieux plus loin.

Les vérins 58 des deux montants 46 sont susceptibles d'être actionnés à l'unisson pour faire parcourir à la partie avant de la plate-forme supérieure 14 un tronçon inférieur de la course 50 verticale entre la position abaissée de la figure 3 et les positions inclinées des figures 2 et 4. En relevant davantage d'une faible quantité la partie avant de la plate-forme 14 au moyen des vérins 58 et en la faisant redescendre par la suite cette partie avant s'accouple avec les moyens d'accrochage 62 qui sont en mesure de la soutenir. Les vérins 60 des deux montants 46 sont en mesure de faire accomplir à la partie mobile intérieure 50 de chaque montant une course verticale telle que, avec la partie avant de la plate-forme 14 accouplée avec les moyens d'accrochage 62, cette partie avant parcourt à son tour un tronçon supérieur de la course verticale entre les positions des figures 1 et 2.

La partie fixe 48 de chaque montant 46 porte à sa partie supérieure une plaque d'articulation 64. A ces plaques 64 est articulé, autour d'un axe transversal, un berceau 66. Le berceau 66 est en outre relié à la partie fixe 48 de chaque montant 46 per un vérin hydraulique 68 respectif qui lui permet de basculer entre une position normale abaissée, représentée en trait plein sur les figures 1 à 3, et une position relevée d'environ 30°, représentée en tirets en figure 3. Le berceau 66, dans la position abaissée, est logé dans un évidement ménagé dans la partie supérieure arrière de la cabine 12. Dans la position relevée le berceau 66 permet de basculer la cabine 12 à la position représentée en tirets en figure 3.

Avec la plate-forme supérieure 14 dans la position inclinée de la figure 2, l'extrémité avant de cette plate-forme 14 est raccordée au berceau 66, lequel est susceptible de recevoir les roues arrière d'un véhicule industriel de grande longueur.

Du berceau 66 est solidaire une portion de plate-forme avant 70 qui surmonte le toit de la cabine 12. Lorsque le berceau 66 est dans la position basse, cette portion de plate-forme 70 se trouve au même niveau horizontal que la plate-forme supérieure 14 dans la position haute de la figure 1. Dans la portion de plate-forme 70 est susceptible de coulisser d'une façon télescopique une portion de plate-forme de raccordement 72, laquelle peut être extraite vers la plate-forme 14, dans la position de la figure 1, pour permettre le chargement de véhicules automobiles jusqu'au-dessus de la cabine 12.

D'une façon avantageuse, une portion arrière de la plate-forme supérieure 14, indiquée par 74 sur les figures 1 à 4, est articulée autour d'un axe transversal horizontal. Cet axe est situé à l'arrière et au voisinage de l'axe autour duquel les montants 20 sont articulés à la plate-forme supérieure. Ainsi que l'on peut observer sur la figure 4, ceci permet de charger sur la plate-forme inférieure un camion $A_1$ de dimensions moyennes, car le relèvement de la portion de plate-forme 74 ménage dans la partie arrière du véhicule un espace utilisable pour loger la cabine du camion $A_1$. La longueur de la partie restante, non relevée, de la plate-forme supérieure 14 permet à celle-ci de loger un autre camion $A_2$ de dimensions moyennes. Une disposition de ce genre n'était pas possible avec d'autres types de systèmes de déplacement de la plate-forme supérieure dans lesquels les vérins de commande étaient installés le long de la partie arrière de la plate-forme supérieure, qui pour cette raison devait être nécessairement fixe.

On décrira maintenant en bref les modes d'exécution illustrés sur les figures 7 et 8. Sur les figures 7 et 8 les parties égales ou semblables à celles des figures 1 à 4 ont été indiquées par les mêmes références et ne seront donc pas décrites une deuxième fois.

Les modes d'exécution des figures 7 et 8 diffèrent entre elles par le fait que les moyens de levage avant, indiqués par 16a dans leur ensemble, sont du même genre que les moyens de levage arrière 16. Leurs éléments ont été indiqués par les mêmes références utilisées pour les moyens de levage arrière 16 et ne seront pas décrits ultérieurement. Il suffira de dire que les moyens de levage 16 et 16a sont susceptibles d'être actionnés indépendamment es uns des autres pour faire prendre à la plate-forme supérieure 14 les quatre positions mentionnées, desquelles la position haute est représentée en trait plein, tandis que les deux positions inclinées et celle basse sont représentées en tirets.

La motrice de la figure 7 comporte également un berceau analogue au berceau 66 du premier mode d'exécution et indiqué par 66a. Ce berceau 66a porte également une portion de plate-forme avant 70 à laquelle est associée une portion de plate-forme de raccordement 72.

Le berceau 66a est supporté par le sommet des parties mobiles verticalement d'une paire de montants latéraux télescopiques 76 qui sont totalement séparés des moyens de levage avant 16a. Les montants 76, dans le mode d'exécution de la figure 7, n'ont que la fonction de relever le berceau 66a et sa portion de plate-forme 70 à la position représentée en tirets pour permettre le basculement de la cabine 12.

Dans la motrice de la figure 7 la portion de plate-forme arrière, indiquée par 74a, est susceptible de coulisser d'une façon télescopique, comme la portion de plate-forme de raccordement 72, entre la position indiquée en trait plein et celle indiquée en tirets. Puisque dans cette dernière position la portion de plate-forme 74a est escamotée, elle permet de réaliser une cargaison du même genre que celle de la figure 4.

## Revendications

1. Véhicule à deux plates-formes superposées pour le transport de véhicules automobiles, du genre dans lequel la plate-forme supérieure (14) est supportée, au voisinage de ses deux extrémités, par des moyens de levage respectivement avant (16a; 18) et arrière (16), susceptibles d'être actionnés indépendamment pour mettre la plate-forme supérieure (14) notamment dans des positions intermédiares inclinées avec une pente descendante vers l'arrière, et dans lequel au moins les moyens de levage arrière (16) comprennent une paire de montants latéraux (20) articulés, autour d'axes transversaux horizontaux, par leurs parties supérieures à la plate-forme supérieure (14) et par leurs parties inférieures à des coulisseaux (22) respectifs, susceptibles de coulisser dans des glissières longitudinales (24) portées par le châssis (10) du véhicule, chaque montant (20) étant à son tour articulé en un point intermédiaire de sa longueur et autour d'un axe transversal horizontal, à une extrémité d'un étançon (28) respectif, celui-ci étant monté sur le châssis de façon à pouvoir pivoter autour d'un axe (30) transversal horizontal, et les étançons (28) étant munis, pour la commande de leur pivotement, de moyens à vérin et maneton dans lesquels un vérin hydraulique (38) est articulé par l'une de ses extremités au châssis (10) et par son autre extrémité à un maneton (36) solidaire en rotation de l'étançon (28), caractérisé en ce que les deux étançons pivotants (28) sont calés, parallèlement entre eux, sur un arbre transversal (30) commun monté rotativement dans le châssis (10), de sorte que les étançons (28) constituent avec l'abre (30) une chape rigide dont les branches sont formées par lesdits étançons, et en ce que que lesdits moyens à vérin et maneton comprennent au moins un maneton (36) calé sur l'arbre transversal (30) commun.

2. Véhicule selon la revendication 1, caractérisé en ce que le vérin (3) ou chaque vérin s'étend sensiblement à l'horizontale dans la direction longitudinale du châssis (10).

3. Véhicule selon la revendication 2, caracérisé en ce que le vérin (38) ou chaque vérin est situé à l'intérieur du châssis (10) du véhicule.

4. Véhicule selon la revendication 3, caractérisé en ce que les moyens de commande du pivotement comprennant un seul vérin (38) relié à un maneton (36) calé sur le milieu de l'arbre transversal (30).

5. Véhicule selon l'une quelconque des revendications précédentes, caractérisé en ce que les moyens de levage avant (16a) sont du même genre que lesdits moyens de levage arrière (16).

6. Véhicule selon l'une des revendications 1 à 4, caractérisé en ce que les moyens de levage avant (18) comprennent une paire de montants latéraux télescopiques (46) chacun desquels comprend une partie fixe (48), fixée au châssis (10), une partie mobile (50) susceptible d'être déplacée verticalement dans la partie fixe (48) et un chariot (54) susceptible de coulisser verticalement dans la partie mobile (50), le chariot (54) et la partie mobile (50) étant pourvus de vérins hydrauliques respectifs (58, 60) pour la commande indépendante de leurs mouvements verticaux, en ce que la plate-forme supérieure (14) est supportée de façon articulée par les chariots (54) des deux montants (46) et la partie mobile (50) de chaque montant est pourvue de moyens d'accrochage (62) susceptibles d'être accouplés à la partie avant de la plate-forme supérieure (14), et en ce que le vérin (58) associé au chariot (54) est susceptible de faire parcourir à ce chariot et à la partie avant de la plate-forme supérieure un tronçon inférieur d'une course verticale, lorsque la plate-forme supérieure (14) est découplée des moyens d'accrochage (62), et le vérin (60) associé à la partie mobile (50) du montant télescopique (46) est susceptible de faire parcourir à la partie avant de la plate-forme supérieure (14) accouplée aux moyens d'accrochage (62), ainsi qu'au chariot (54), le tronçon supérieur de la course verticale.

7. Véhicule selon la revendication 5, notamment motrice de camion-remorque à cabine basculante, caractérisé en ce qu'il comprend une paire de montants latéraux télescopiques (76) au sommet de la partie mobile desquels est fixé un berceau (66a) qui, dans la position contractée des montants (76), est logé dans un évidement ménagé dans la partie supérieure arrière de la cabine (12) et, dans la position étendue des montants (76), est soulevé à un niveau tel qu'il permet le basculement de la cabine (12).

8. Véhicuie selon la revendication 5, notamment motrice de camion-remorque à cabine basculante, caractérisé en ce qu'il comprend un berceau basculant (66), articulé autour d'un axe transversal à la partie fixe (48) de chaque montant télescopique (46) et relié à cette partie fixe (48) par des vérins hydrauliques de basculement respectifs (68), ce berceau (66) étant susceptibie d'être déplacé entre une position abaissée dans laquelle il est logé dans un évidement ménagé dans la partie supérieure arrière de la cabine (12), et une position relevée dans laquelle il permet le bascuiement de la cabine (12).

9. Véhicule selon la revendication 7 ou 8, caractérisé en ce que le berceau (66; 66a) porte une portion de plate-forme avant (70) qui surmonte le toit de la cabine (12), et en ce qu'à cette portion de plate-forme avant (70) est associée une portion de plate-forme de raccordement (72), ces portions de plate-forme (70, 72) étant situées au même niveau que la plate-forme supérieure (14) dans la position relevée, pour constituer conjointement un prolongement de cette plate-forme (14) sur l'avant.

10. Véhicule selon l'une des revendications précédentes, caractérisé en ce que la plate-forme supérieure (14) est pourvue d'une portion de plate-forme arrière (64; 74a) susceptible d'être déplacée entre une position dans laquelle elle est située dans le même plan que cette plate-forme (14) et une position escamotée dans laquelle le plan de chargement défini par la plate-forme supérieure (14) est raccourci pour ménager une hauteur de charge plus grande sur la partie arrière de la plate-forme inférieure du véhicule.

11. Véhicule selon la revendication 10, caractérisé en ce que la portion de plate-forme arrière mobile (74) est articulée selon un axe transversal situé à l'arrière et au voisinage de l'axe d'articulation des montants (20) à la plate-forme supérieure, cette portion de plate-forme (74) étant susceptible de basculer vers les haut et vers l'avant par rapport à la position dans laquelle elle est située dans le même plan que le reste de la plate-forme supérieure (14).

12. Véhicule selon la revendication 10, caractérisé en ce que la portion de plate-forme arrière mobile (74a) est susceptible de coulisser de façon télescopique par rapport au reste de la plate-forme arrière (74), entre une position dans laquelle elle complète cette plate-forme sur l'arrière et une position escamotée dans la plate-forme supérieure (14).

**Patentansprüche**

1. Fahrzeug mit zwei übereinanderliegendem Plattformen für den Transport von Kraftfahrzeugen, wobei die obere Plattform (14) in der Nähe ihrer beiden Enden von einem vorderen (6a, 18) bzw. einem hinteren (16) Hebezeug getragen wird, die unabhängig voneinander betätigt werden können, um die obere Plattform (14) in Bezug auf die untere Plattform, insbesondere in eine hohe und niedere Horizontalzwischenstellung sowie auch in nach hinten geneigte Zwischenstellungen zu bringen, und wobei die hinteren Hebezeuge (16) ein Paar seitliche Stützen (20) besitzen, die mittels horizontaler Querachsen mit ihren Oberteilen an der oberen Plattform (14) und mit ihren Untertellen an zugehörigen Gleitstücken (22) schwenkbar sind, die in längsgerichteten Gleitschienen (24) gleiten können, die vom Fahrzeugrahmen (10) getragen werden, wobei jede Stütze (20) um einen Punkt in der Mitte ihrer Länge und um eine horizontale Querachse schwenkbar mit einer zugehörigen Strebe (28) verbunden ist, die am Rahmen so befestigt ist, daß sie sich um eine horizontale Querachse drehen kann, wobei die Strebe (28) für die Steuerung ihrer Bewegung mit Zylinder- und Kurbelformvorrichtungen versehen sind, bei welchen ein Hydraulikzylinder (38) an einem seiner Enden mit dem Rahmen (10) und an seinem anderen Ende mit einem Kurbelarm (36) verbunden ist, welcher drehbar an die Strebe (28) angebracht ist,
dadurch gekennzeichnet,
daß die zwei schwenkbarer Streben (28) zueinander parallel auf einer gemeinsamen querliegenden Welle (30), die drehbar im Rahmen (10) befestigt ist, derart festsitzen, daß die Streben (28) mit der Welle (30) einen starren Bügel bilden, dessen Ärme von diesen Streben, gebildet worden, und daß die Zylinder- und Kurbelarmvorrichtungen mindestens einen Kurbelarm (36) umfassen, der auf der querliegenden gemiensamen Welle (30) aufgekeilt ist.

2. Fahrzeug nach Anspruch 1,
dadurch gekennzeichnet,
daß sich jeder Zylinder (38) im wesentlichen horizontal in Längsrichtung des Rahmens (10) erstreckt.

3. Fahrzeug nach Anspruch 2,
dadurch gekennzeichnet,
daß der oder die Zylinder (38) im Inneren des Fahrzeugrahmens (10) angeordnet sind.

4. Fahrzeug nach Anspruch 3,
dadurch gekennzeichnet,
daß die Steuerungsvorrichtungen für das Schwenken aus einem einzigen Zylinder (38) bestehen, der mit einem Kurbelarm (36) verbunden ist, der in der Mitte der querliegenden Welle (30) aufgekeilt ist.

5. Fahrzeug nach einem der vorhergehenden Ansprüche,
dadurch gekennzeichnet,
daß die vorderen Hebezeuge (16a) von gleicher Art sind wie die hinteren Hebezeuge (16).

6. Fahrzeug nach einem der Ansprüche 1 bis 4,
dadurch gekennzeichnet,
daß die vorderen Hebezeuge (18) ein Paar seitlicher Teleskopstreben (46) besitzen, deren jede einen festen Teil (48) hat, der am Rahmen (10) festsitzt, sowie einen beweglichen Teil (50), der im festen Teil (48) vertikal verschoben werden kann und ein Gleitstück (54), das im beweglichen Teil (50) vertikal gleiten kann, wobei das Gleitstück (54) und der bewegliche Teil (50) für ihre voneinander unabhängige Steuerung mit den zugehörigen Hydraulikzylindern (58, 60) versehen sind, sowie daß die obere Plattform (14) durch die Gleitstücke (54) det beiden Stützen (46) schwenkbar getragen wird und der bewegliche Teil (50) jeder Stütze mit einer Einhängevorrichtung (62) versehen ist, die an den Vorderteil der oberen Plattform (14) angeschlossen werden kann, sowie daß der mit dem Gleitstück (54) verbundene Zylinder (58) dieses Gleitstück und den Vorderteil der oberen Plattform einen unteren Abschnitt der Vertikalbahn durchlaufen läßt, während die obere Plattform (14) von der Einhängevorrichtung (62) gelöst wird und der mit dem beweglichen Teil (50) der Teleskopstrebe (46) verbundene Zylinder (60) den Vorderteil der oberen Plattform (14), der an die Einhängevorrichtung (62) angeschlossen ist, sowie das Gleitstück (54) den oberen Abschnitt der Vertikalbahn durchlaufen läßt.

7. Fahrzeug nach Anspruch 5, insbesondere Zugwagen mit kippbarem Führerhaus,
dadurch gekennzeichnet,
daß es ein Paar seitlicher Teleskopstreben (76) besitzt, an deren beweglichem Teil oben eine Wiege (66a) befestigt ist, die bei eingezogenen Stützen (76) in einer Ausnehmung oben am Hinterteil der Kabine (12) liegt und bei gestreckten Stützen (76) soweit angehoben wird, daß das Führerhaus gekippt werden kann.

8. Fahrzeug nach Anspruch 5, insbesondere Zugwagen mit kippbarem Führerhaus,
dadurch gekennzeichnet,
daß es eine schwenkbare Wiege (66) besitzt, die sich um eine Querachse am festen Teil (48) jeder Teleskopstrebe (46) drehen kann und mit diesen festen Teil (48) durch zugehörige schwenkbare Hydraulikzylinder (68) verbunden ist, wobei diese Wiege (66) zwischen einer unteren Stellung, in der sie in einer Ausnehmung an oberen Hinterteil der Kabine (12) liegt, und einer angehobenen Stellung, in welcher sie das Kippen des Führerhauses gestattet, bewegt werden kann.

9. Fahrzeug nach Anspruch 7 oder 8,
dadurch gekennzeichnet,
daß die Wiege (66, 66a) einen Teil der vorderen Plattform (70) trägt, der das Dach des Führerhauses überragt, sowie daß an diesen Teil der vorderen Plattform (70) eine Verbindungsplattform (72) angeschlossen ist, wobei sich diese Plattformteile (70, 72) auf gleicher Höhe mit der oberen Plattform (14) in angehobener Stellung befinden, um so gemeinsam eine Verlängerung der Plattform (14) nach vorne hin zu bilden.

10. Fahrzeug nach irgendeinem der vorhergehenden Ansprüche, dadurch gekennzeichnet, daß die obere Plattform (14) einen hinteren Plattformansatz (64, 74a) besitzt, der zwischen einer Stellung in gleicher Ebene mit der Plattform (14) und einer eingezogenen Stellung bewegt werden kann, in welcher die von der oberen Plattform (14) bestimmte Ladeflächenebene verkürzt ist, um auf dem hinteren Teil der unteren Fahrzeugplattform eine Ladung von größerer Höhe unterbringen zu können.

11. Fahrzeug nach Anspruch 10,
dadurch gekennzeichnet,
daß der bewegliche Hinterteil der Plattform (74) un eine Querachse schwenken kann, die hinter und im Nähe der Schwenkachse der Stützen (20) an der oberen Plattform liegt, wobei dieser Plattformteil (74) gegenüber seiner Stellung in gleicher Ebene wie die übrige obere Plattform (14) nach oben und nach vorne geschwenkt werden kann.

12. Fahrzeug nach Anspruch 10,
dadurch gekennzeichnet,
daß der bewegliche hintere Plattformteil (74a) gegenüber der übrigen hinteren Plattform (74) zwischen einer Stellung, in der er diese Plattform hinten ergänzt, und einer eingezogenen Stellung in der oberen Plattform (14) teleskopisch gleiten kann.

## Claims

1. A vehicle provided with two superposed platforms for the transport of automobile vehicles, of the type in which the upper platform (14) is supported in the vicinity of its two ends by respective front (16a; 18) and rear (16) hoisting means capable of being operated independently to locate the upper platform (14) in high and low horizontal position with respect to the lower platform and further in intermediate inclined positions with a slope descending towards the rear and in which at least the rear hoisting means (16) comprise a pair of lateral arms (20) articulated, about horizontal transverse axes, by their upper portions to the upper platform (14) and by their lower portions to respective slide blocks capable of sliding in longitudinal guides (24) carried by the chassis (10) of the vehicle, each arm (20) in its turn being articulated at a point intermediate of its length and about a transverse horizontal axis to one end of a respective stanchion (28), the latter being mounted on the chassis for pivoting about a transverse horizontal axis (30) and the stanchions (28) being provided, for controlling the pivoting thereof, with ram and pin means in which a hydraulic ram (38) is articulated at one end thereof to the chassis (10) and at the other end thereof to a pin torsionally rigid with the stanchion (28), characterised in that, the two pivoting stanchions (28) are fixed parallel to one another on a common transverse shaft (30) rotatably mounted in the chassis (10) so that the stanchions (28) constitute with the shaft (30) a rigid fork the branches of which are formed by the said stanchions and that the said ram and pin means comprise at least one pin (36) fixed to the common transverse shaft (30).

2. A vehicle according to claim 1, characterised in that, the ram (38) or each ram extends substantially horizontal in the longitudinal direction of the chassis (10).

3. A vehicle according to claim 2, characterised in that, the ram (38) or each ram is situated inside the chassis (10) of the vehicle.

4. A vehicle according to claim 3, characterised in that, the means for controlling the pivoting comprise a single ram (38) connected to a pin (36) fixed to the middle of the transverse shaft (30).

5. A vehicle according to any one of the preceding claims, characterised in that, the front hoisting means are of the same kind as the said rear hoisting means (16).

6. A vehicle according to one of claims 1 to 4, characterised in that, the front hoisting means (18) comprise a pair of lateral telescopic arms (46) each of which comprises a fixed part (48) fixed to the chassis (10), a movable part (50) capable of vertical displacement within the fixed part (48) and a carriage (54) capable of sliding vertically in the movable part (50), the carriage (54) and the movable part (50) being provided with respective hydraulic rams (58, 60) for the independent control of their vertical movements, and in that the upper platform (14) is supported in an articulated manner by the carriages (54) of the two arms (46) and the movable part (50) of each arm is provided with latching means (62) capable of being coupled to the front portion of the upper platform (14), and in that the ram (58) associated with the carriage (54) is capable of causing the carriage and the front portion of the upper platform to traverse a lower section of a vertical course when the upper platform (14) is uncoupled from the latching means (62) and the ram (60) associated with the movable part (50) of the telescopic arm (46) is capable of causing the front portion of the upper platform (14) coupled to the latching means (62), as well as the carriage (54), to traverse the upper section of the vertical course.

7. A vehicle according to claim 5, particularly a motor trailer truck provided with a tipping cab, characterised in that, it comprises a pair of telescopic lateral arms (76) at the summit of the movable part of which is fixed a cradle (66a) which, in the retracted position of the arms (76), is housed in a recess provided in the rear upper portion of the cab (12) and in the extended position of the arms (76), is raised to a level which permits tipping of the cab (12).

8. A vehicle according to claim 5, particularly a motor trailer truck provided with a tipping cab, characterised in that, it comprises a tipping cradle (66) articulated about a transverse axis to the fixed part (48) of each telescopic arm (46) and connected to the said fixed part (48) by respective tipping hydraulic rams, the said cradle (66) being capable of displacement between a lowered position in which it is housed in a recess provided in the upper rear portion of the cab (12) and a raised position in which it permits tipping of the cab (12).

9. A vehicle according to claim 7 or 8, characterised in that, the cradle (66; 66a) carries a portion of the front platform (70) which surmounts the roof of the cab (12) and in that a portion of the connecting platform (72) is associated with the said portion of the front platform (70), these platform portions (70, 72) being situated at the same level as the upper platform (14) in the raised position so as to constitute conjointly an extension of the said platform (14) towards the front.

10. A vehicle according to one of the preceding claims, characterised in that, the upper platform (14) is provided with a rear platform portion (64; 74a) capable of displacement between a position in which it is situated in the same plane as the said platform (14) and a retracted position in which the loading plane defined by the upper platform (14) is shortened to provide a greater loading height above the rear portion of the lower platform of the vehicle.

11. A vehicle according to claim 10, characterised in that, the movable portion of the rear platform (74) is articulated according to a transverse axis situated at the rear and in the vicinity of the axis of articulation of the arms (20) to the upper platform, the said portion of the platform (74) being capable of tipping upwards and towards the front with respect to the position in which it is situated in the same plane as the remainder of the upper platform (14).

12. A vehicle according to claim 10, characterised in that, the movable portion of the rear platform (74a) is capable of sliding telescopically with respect to the remainder of the rear platform (74) between a position in which it completes the said platform towards the rear and a position retracted within the upper platform (14).

FIG. 1

FIG. 7

0 024 265

FIG. 2

FIG. 3

0 024 265

FIG 4

FIG. 6

FIG. 5

FIG. 8

0 024 265